# FASCICULE DE BREVET EUROPEEN

(11) **EP 1 469 207 B1**
(45) Date de publication et mention de la délivrance du brevet: **07.05.2008**
(21) Numéro de dépôt: 04368031.3
(22) Date de dépôt: 16.04.2004
(51) Int. Cl.: F16B 21/07, F02M 35/10, F16F 1/373, F16F 15/08

(54) **Dispositif d'accouplement par emboitement entre deux éléments**
Kupplungsvorrichtung durch Einführen zwischen zwei Elementen
Device of coupling by fitment between two elements

(30) Priorité: 16.04.2003 FR 0304769
(43) Date de publication de la demande: 20.10.2004
(73) Titulaire: MECAPLAST S.A.M., 98014 Monaco Cédex (MC)
(72) Inventeur: Quevallier, Jean-Claude, 59810 Lesquin (FR); Wiertel,Philippe, 62300 Lens (FR); Dufour, Bertrand, 59551 Attiches (FR); Bouteille, David, 62300 Lens (FR); Vianparis,Daniel, 59470 Herseele (FR); Coustenoble, Laurent, 62123 Bailleulval (FR)
(74) Mandataire: Delorme, Nicolas

(56) Documents cités:
- DE-A- 4 002 446
- FR-A- 2 796 998
- US-A- 4 616 953
- US-B2- 6 665 914

## Description

La présente invention concerne un dispositif d'acouplement par emboîtement destiné à relier un premier élément à un second élément de constuction, en particulier pour relier un écran de type cache-style à un moteur de façon à ce que les vibrations issues du bloc moteur ne soient pas transmises au cache-style.

Les écrans de type cache-style ont une fonction esthétique et une fonction acoustique puisqu'ils doivent amortir le bruit généré par le bloc moteur et en particulier les vibrations. Le dispositif de fixation d'un tel écran doit répondre à une double exigence ; d'une part il doit assurer une fixation solide sur le moteur tout en permettant des montages et des démontages successifs et d'autre part, il doit assurer une fonction de découplage entre le moteur et l'écran de façon à ce que l'écran ne devienne pas également une source de vibrations et donc de bruit.

Ces dispositifs d'acouplement par emboîtement sont généralement composés de deux parties : une pièce en plastique creuse approximativement en forme de cône, qui constitue la partie femelle, et sur la base de laquelle l'écran vient se fixer, et un pion comportant une tête arrondie qui constitue la partie mâle. La pièce en plastique creuse vient coopérer par emboîtement sur le pion solidaire du moteur. La fonction clippage/déclippage est assurée par la tête du ainsi que la fonction découplage, qui consiste à filtrer les vibrations provenant du support (c'est à dire le moteur) afin qu'elles ne soient pas transmises à l'écran. Un tel dispositif est décrit dans le brevet FR 2 796 998 dans lequel la partie femelle est un pièce en plastique comportant un soufflet dans lequel est inséré le pion. La liaison entre la pièce mâle et la pièce femelle se fait au dessus du soufflet, au niveau de la tête du pion. Dans un tel dispositif, le découplage est assuré à la fois par déformation du soufflet et par la zone de liaison entre la pièce mâle et la pièce femelle. L'inconvénient d'un tel système réside dans le fait que la partie de la pièce en plastique dans laquelle est insérée la tête du pion, doit être dimensionnée pour répondre à la fois à des contraintes mécaniques, liées aux efforts de clippage et déclippage et, à des contraintes acoustiques. Cette double exigence rend le dimensionnement complexe et hasardeux. De plus, la pièce en plastique qui subit des contraintes d'effort de fixation répétées après de multiples montages et démontages risque de se déformer et ainsi de ne plus remplir correctement son rôle de découplage pour amortir les vibrations du moteur.

C'est pourquoi un premier but de l'invention est de fournir un dispositif de maintien d'un écran de type cache-style permettant de régler de façon indépendante les paramètres de clippage/déclippage et les paramètres de découplage.

Un autre but de l'invention est de fournir un dispositif de maintien d'un écran de type cache-style permettant d'atteindre des valeurs d'effort et de déclippage élevées de façon à assurer une bonne retenue de l'écran acoustique.

Selon un premier aspect, l'objet de l'invention est donc un dispositif d'accouplement par emboîtement défini par les caractéristiques de la revendication 1.

Selon un deuxième aspect, le dispositif comprend un pion de montage solidaire d'un premier élément, le pion comprenant une tête et une tige et étant destiné à se loger dans un plot solidaire d'un deuxième élément. Selon une des caractéristiques principales de l'invention, le pion comprend une butée située sur la tige entre la tête et la base du pion. Lors du montage du pion dans le plot, cette butée vient en appui contre un épaulement prévu sur la paroi intérieure du plot.

Selon un troisième aspect, le dispositif comprend un plot de fixation solidaire d'un premier élément, et destiné à recevoir un pion de montage fixé à un deuxième élément de construction. Le plot est constitué d'une paroi qui délimite une cavité comprenant un logement supérieur délimité par un épaulement supérieur et destiné à enserrer la tête du pion, et d'un logement inférieur. Selon une des caractéristiques principales de l'invention, la zone délimitant le logement supérieur est une zone déformable élastiquement. Cette zone constitue la zone de travail assurant la fonction découplage, tandis que la zone délimitant le logement inférieur est une zone relativement rigide destinée à asurer la fonction clippage / déclippage.

Les buts, objets et caractéristiques de l'invention apparaîtront plus clairement à la lecture de la description qui suit faite en référence aux dessins dans lesquels :
La figure 1 représente une coupe du pion de montage selon l'invention,
La figure 2 représente une coupe du plot de fixation de l'écran selon l'invention,
La figure 3 représente une coupe du dispositif d'accouplement constitué du plot et du pion.

L'invention est décrite pour une configuration préférentielle, dans laquelle le premier élément est un cache-style et le deuxième élément est le bloc moteur. Dans une configuration alternative, le premier élément est un cache-style tandis que le deuxième élément est un bloc moteur. Enfin, dans les deux cas le cache-style peut être remplacé par tout autre pièce du compartiment moteur devant être découplée.

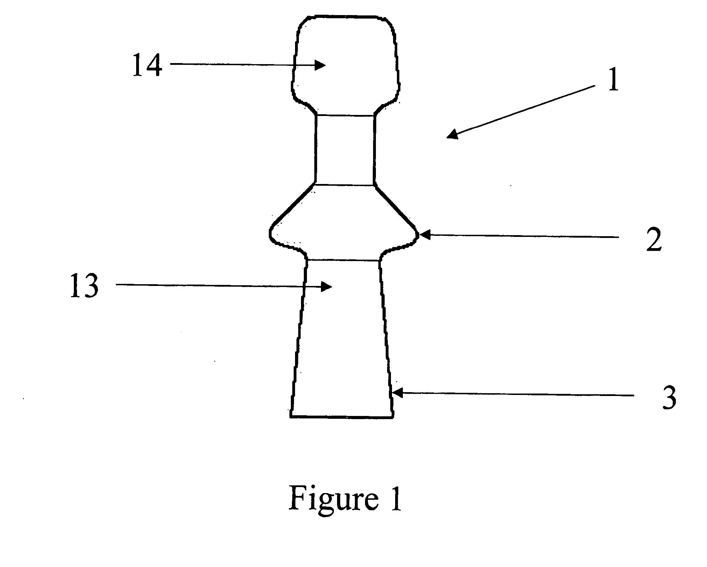

Selon la figure 1, le pion 1 est constitué d'une tige 13 surmontée d'une tête 14. Le pion 1 est associé au bloc moteur par tout moyen, solidaire ou rapporté non représenté sur la figure. La tige 13 du pion 1 présente une butée située entre la base 3 du pion et la tête 14 du pion. La butée est préférentiellement constituée par une augmentation du diamètre de la tige et constitue ainsi une collerette 2 sensiblement en forme de cône. Cependant, la butée peut ne pas présenter une forme continue tout autour de la tige du pion mais peut présenter une forme interrompue. La butée peut être également formée par une pièce rapportée autour de la tige 13 du pion, telle qu'un anneau afin de pouvoir équiper les pions dont la tige est lisse. La tête 14 du pion présente un diamètre sensiblement plus large que le diamètre de la tige 13 hormis la collerette dont le diamètre peut être plus large que celui de la tête. La forme de la tête du pion est sphérique, mais pourrait être tronconique ou autre.

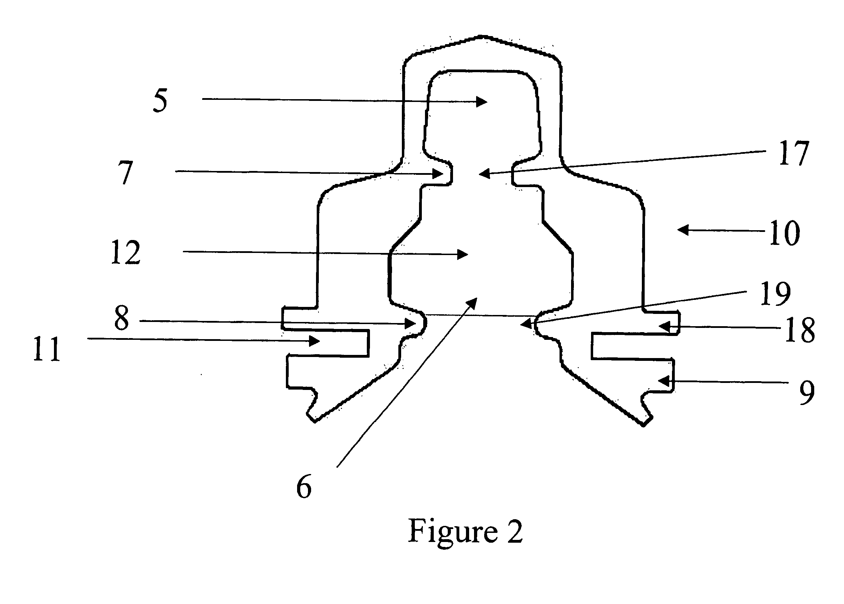

Selon la figure 2, le plot de fixation 10 est de préférence réalisé en matériau élastomère, par exemple en EPDM ou en silicone, et comporte trois zones, la zone de travail, la zone de support et la zone d'introduction du pion. La paroi du plot 10 délimite une cavité interne 6 subdivisée en deux logements 5 et 12. Le logement supérieur 5 est sensiblement sphérique et est délimité par la partie supérieure de la paroi du plot 10 et par un épaulement 7 de la paroi intérieure du plot 10. Cette zone du plot est la zone de travail, déformable élastiquement, et comporte une paroi de faible épaisseur. C'est cette zone qui assure la fonction découplage. La zone de support du plot 10 est définie par le logement inférieur 12. Le logement inférieur 12 est délimité d'une part par les parois latérales du plot 10, et d'autre part par l'épaulement supérieur 7. Cet épaulement coopère avec la tête du pion pour assurer la fonction clippage/déclippage quand le plot travaille en dynamique.

La paroi intérieure du logement inférieur comprend un épaulement inférieur 8 destiné à coopérer avec la collerette du pion en position de montage. Cet épaulement coopère avec la collerette et sa géométrie influe sur la fonction clippage/déclippage en position de montage. L'épaulement intérieur inférieur 8 délimite une ouverture 19. Le diamètre de l'ouverture 19 est légèrement supérieur au diamètre de la collerette 2 du pion 1. Les logements supérieur 5 et inférieur 12 communiquent par une ouverture 17 définie par l'épaulement 7. Dans le mode de réalisation préférentiel, la paroi du plot est plus épaisse au niveau de la zone de support qu'au niveau de la zone de travail. Cette paroi plus épaisse a pour rôle de rigidifier le plot et de rendre cette partie peu déformable. L'épaisseur et les dimensions de la paroi du plot 10 sont définies en fonction des résultats acoustiques à atteindre. Dans une configuration alternative, la rigidité souhaitée pour la zone support peut être obtenue en enchâssant autour du plot un anneau thermoplastique dont le diamètre intérieur serait égal au dimètre extérieur du plot

La paroi externe du plot 10 comprend préférentiellement deux épaulements 9 et 18 perpendiculaires à l'axe de symétrie du plot 10. L'épaulement extérieur inférieur 9 est situé sur la figure près de la zone d'introduction du pion, à l'extrêmité des parois du plot tandis que l'épaulement extérieur supérieur 18 est situé au-dessus de l'épaulement 9. Les deux épaulements 9 et 18 sont distants l'un de l'autre de façon à définir une gorge 11 dans laquelle vient s'insérer le système de maintien de l'écran amovible. L'emplacement de la gorge 11 est situé à n'importe quelle hauteur au niveau de la zone de support. Le système de maintien de l'écran est situé sous l'écran et est défini de préférence par une pièce munie d'une ouverture dont les bords coopèrent avec la gorge 11 définie par les épaulements 9 et 18. Le plot est préférentiellement relié à l'écran grâce à la gorge située entre les deux épaulements du plot, mais tout autre système de liaison connu de l'homme de métier peut également être utilisé. En particulier, le plot peut être surmoulé sur l'écran.

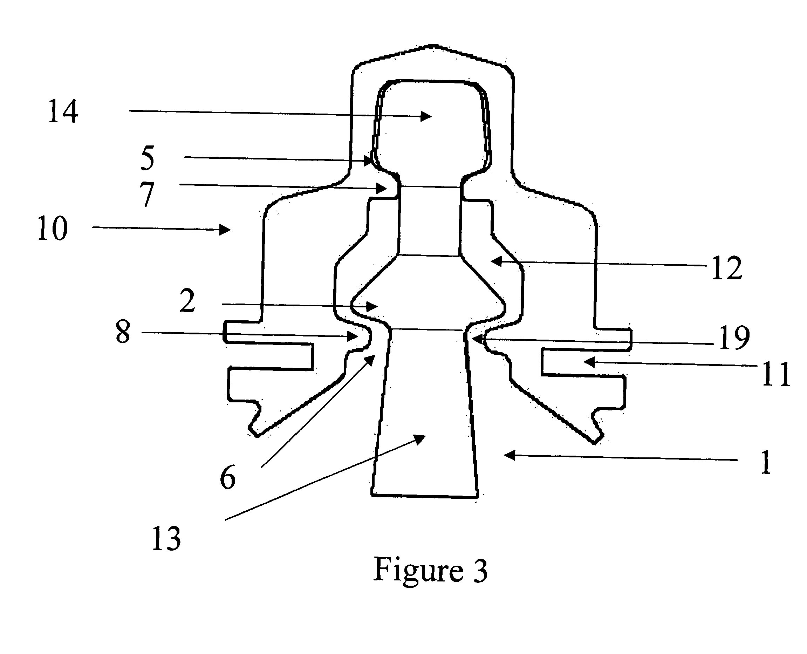

Selon la figure 3, le pion 1 est inséré dans le plot de fixation 10. Cette position est atteinte lorsque l'écran ou cache-style est en place sur le moteur. La mise en place de l'écran est obtenue par la mise en place de chaque pion dans son plot respectif. Le pion 1 est alors présenté devant l'ouverture 19 du plot 10 puis inséré sans effort jusqu'à ce que la collerette 2 vienne se positionner en appui contre l'épaulement 8. Le montage complet consiste à venir exercer un effort déterminé afin que la collerette 2 vienne se positionner dans le logement inférieur 12. La tête 14 du pion 1 est alors insérée dans le logement 5 du plot.

L'effort fourni par l'opérateur pour la mise en place de la collerette correspond à l'effort nécessaire pour écarter les parois du plot au niveau de l'ouverture 19 afin que la collerette 2 passe au travers, le diamètre de la collerette étant supérieur au diamètre de l'ouverture 19 formée par l'épaulement 8. L'écartement des parois du plot est possible du fait du caractère élastique du matériau élastomère formant les parois du plot.

La position de montage dans laquelle la collerette 2 est en appui contre l'épaulement 8 correspond à une position transitoire. En position définitive, lorsque le plot est correctement positionné sur le pion, la collerette 2 n'est plus en contact avec l'épaulement 8 et ce, même lorsque le moteur tourne. De plus, le diamètre intérieur du logement inférieur 12 du plot étant supérieur au diamètre de la tige 13 du pion pour sa partie située au-dessus de la butée 5, il existe un jeu entre la tige du pion et le plot.

Au niveau du logement 5, la paroi du plot enveloppe complétement la tête 14 du pion par sa partie sphérique et par l'épaulement 7 qui vient enserrer la tête 14 du pion sur sa partie la plus étroite située à sa jonction avec la tige 13. Ainsi, la tête 14 et la paroi intérieure du plot 10 au niveau du logement 5 sont en contact, ce qui permet d'assurer la liaison entre la tête du pion et le plot. Les vibrations du moteur transmises par le pion au plot sont localisées sur la zone de travail du plot et donc au niveau de la tête. Cette zone étant de moindre épaisseur que le reste du plot, elle se déforme davantage que le reste du plot. Donc, en dynamique c'est à dire lorsque le moteur tourne, la zone de travail remplit la fonction découplage et également la fonction d'ancrage du plot sur le pion. Les vibrations sont ainsi filtrées par le plot au niveau de la tête, c'est à dire par la zone de travail du plot.

En pratique, l'écran ou cache-style est fixé au moteur par une pluralité de plots et de pions. L'écran est fixé aux plot par un ensemble de dispositifs de maintien solidaires de l'écran. Chaque dispositif de maintien vient s'insérer dans la gorge 11 prévue à cet effet à la base des plots 10. La fixation du plot sur le pion est donc assurée à la fois par la tête du pion et par la butée située sur la tige du pion ou collerette 2. La fonction découplage est assurée par la tête du pion.

En résumé, une caractéristique essentielle de l'invention consiste à utiliser un plot comprenant dux zones distinctes :
Une zone déformable élastiquement, située autour du logement supérieur et qui vient enchâsser la tête du pion. Cette zone constitue la zone de travail , et
Une zone relativement rigide, qui sert de support d'une part à la zone de travail et d'autre part à l'écran via la gorge. Cette zone est située entre la base du plot et l'épaulement supérieur.

Lorsque le plot travaille en dynamique, la déformation est localisée à la partie du plot qui entoure la tête.

L'avantage d'un tel dispositif d'accouplement est d'obtenir des valeurs d'efforts de déclippage élevées sans diminuer les performances acoustiques du dispositif. Ainsi, à performances acoustiques équivalentes, on peut augmenter les efforts de déclippage de 50%. En outre, le fait d'assurer les performances de découplage même après plusieurs montages/démontages successifs constitue un avantage non négligeable.

## Revendications

1. Dispositif d'accouplement par emboîtement destiné à relier un premier élément à un second élément constitué
- d'au moins un plot (10) présentant une cavité (6) comprenant (i) un épaulement supérieur (7), ledit épaulement (7) délimitant un logement supérieur (5) élastiquement déformable et un logement inférieur (12) et (ii) un épaulement inférieur (8), et
- d'au moins un pion de montage (1) constitué d'une tige (13) surmontée d'une tête (14) et présentant une collerette (2) formant butée, ladite tête (14) étant destinée à venir s'insérer dans le logement supérieur (5) de la cavité interne (6) dudit plot (10) de sorte que le tête (14) est complètement enveloppée par le logement (5) et par l'épaulement (7), et le diamètre de la tige (13) étant inférieur au diamètre du logement inférieur (12), la collerette (2) étant en appui contre l'épaulement (8) en position transitoire de montage du dispositif et étant dépourvue de contact avec l'épaulement (8) en position définitive du dispositif.

2. Dispositif d'accouplement selon la revendication 1, **caractérisé en ce que** le premier élément est le cache-style d'un véhicule automobile et le deuxième élément est un bloc moteur.

3. Dispositif d'accouplement selon la revendication 1 ou 2, dans lequel ladite butée formant une collerette (2) est constituée par une augmentation du diamètre de ladite tige.

4. Dispositif d'accouplement selon l'une quelconque des revendications 1, 2 ou 3, dans lequel la paroi externe dudit plot (10) comprend deux épaulements, un épaulement extérieur inférieur (9) et un épaulement extérieur supérieur (18), l'épaulement extérieur inférieur (9) étant situé de préférence à l'extrémité des parois dudit plot tandis que l'épaulement extérieur supérieur (18) est situé au-dessus dudit épaulement (9).

5. Dispositif d'accouplement selon l'une des revendications 1 à 4 dans lequel le pion de montage (1) est solidaire d'un premier élément, ledit pion comprenant une tête (14) et une tige (13) et étant destiné à se loger dans un plot de fixation (10) solidaire d'un deuxième élément,
**caractérisé en ce que** le dit pion de montage comprend une butée située sur ladite tige entre ladite tête et ladite base du pion et destinée à venir en appui contre un épaulement intérieur du plot lors du montage dudit pion (1) dans ledit plot (10).

6. Dispositif d'accouplement selon la revendication 5, **caractérisé en ce que** ladite butée est constituée par une augmentation du diamètre de ladite tige (13) et forme une collerette (2) d'un diamètre supérieur à celui de la tige du pion.

7. Dispositif d'accouplement selon l'une des revendications 1 à 6, **caractérisé en ce que** le plot de fixation (10) est solidaire d'un premier élément, destiné à recevoir un pion de montage (1) solidaire d'un deuxième élément, ledit plot étant constitué d'une paroi qui délimite une cavité (6) comprenant un logement supérieur (5) délimité par un épaulement supérieur (7) et un logement inférieur, **caractérisé en ce que** la zone délimitant ledit logement supérieur (5) est une zone déformable élastiquement dans laquelle vient s'enserrer la tête dudit pion et qui constitue la zone de travail assurant la fonction découplage et **en ce que** la zone délimitant ledit logement inférieur est une zone relativement rigide destinée à assurer la fonction clippage/déclippage.

8. Dispositif d'accouplement selon la revendication 7, **caractérisé en ce que** ladite cavité (6) comprend en outre un épaulement inférieur (8) destiné à coopérer avec une butée située sur la tige du pion lors du montage du plot sur ledit pion.

9. Dispositif d'accouplement selon l'une des revendications 7 ou 8, **caractérisé en ce que** la paroi externe dudit plot (10) comprend deux épaulements, un épaulement extérieur inférieur (9) et un épaulement extérieur supérieur (18), l'épaulement extérieur inférieur (9) étant situé de préférence à l'extrémité des parois dudit plot tandis que l'épaulement extérieur supérieur (18) est situé au-dessus dudit épaulement (9).

10. Dispositif d'accouplement selon l'une des revendications 7, 8 ou 9, dans lequel la paroi de la partie du plot entourant le logement inférieur est plus épaisse que la paroi dudit plot au niveau dudit logement supérieur (5).

11. Dispositif d'accouplement selon la revendication 7, **caractérisé en ce que** la paroi du plot est réalisé en matériau élastomère.

## Claims

1. Male/female coupling device for connecting a first element to a second element, consisting of:
- at least one socket (10) having a cavity (6) comprising (i) an upper collar (7), the said collar (7) delimiting an elastically deformable upper housing (5) and a lower housing (12), and (ii) a lower collar (8); and
- at least one insertion pin (1) consisting of a shaft (13) provided at the top with a head (14) and having a flange (2) forming a stop, the said head (14) being intended to be inserted into the upper housing (5) of the internal cavity (6) of the said socket (10) such that the head (14) is entirely enclosed by the housing (5) and by the collar (7), and the diameter of the shaft (13) being less than the diameter of the lower housing (12), the flange (2) bearing against the collar (8) in a transitional insertion position of the device and not being in contact with the collar (8) in the final position of the device.

2. Coupling device according to Claim 1, **characterized in that** the first element is the engine cover of a motor vehicle and the second element is an engine block.

3. Coupling device according to Claim 1 or 2, in which the said stop forming a flange (2) consists of an area of increased diameter of the said shaft.

4. Coupling device according to any one of Claims 1, 2 or 3, in which the outer wall of the said socket (10) has two collars, a lower outer collar (9) and an upper outer collar (18), the lower outer collar (9) being situated preferably at the end of the walls of the said socket while the upper outer collar (18) is situated above the said collar (9).

5. Coupling device according to one of Claims 1 to 4, in which the insertion pin (1) is secured to a first element, the said pin having a head (14) and a shaft (13) and being intended to be housed in a mounting socket (10) secured to a second element,
**characterized in that** the said insertion pin comprises a stop situated on the said shaft between the said head and the said base of the pin and intended to bear against an inner collar of the socket during the insertion of the said pin (1) into the said socket (10) .

6. Coupling device according to Claim 5, **characterized in that** the said stop consists of an area of increased diameter of the said shaft (13) and forms a flange (2) with a diameter greater than that of the shaft of the pin.

7. Coupling device according to one of Claims 1 to 6, **characterized in that** the mounting socket (10) is secured to a first element intended to receive an insertion pin (1) secured to a second element, the said socket consisting of a wall delimiting a cavity (6) having an upper housing (5) delimited by an upper collar (7) and a lower housing,
**characterized in that** the zone delimiting the said upper housing (5) is an elastically deformable zone into which the head of the said pin is inserted and which constitutes the working zone performing the decoupling function and **in that** the zone delimiting the said lower housing is a relatively rigid zone intended to perform the clipping in/unclipping function.

8. Coupling device according to Claim 7, **characterized in that** the said cavity (6) further comprises a lower collar (8) intended to cooperate with a stop situated on the shaft of the pin while the socket is fitted over the said pin.

9. Coupling device according to either of Claims 7 and 8, **characterized in that** the outer wall of the said socket (10) has two collars, a lower outer collar (9) and an upper outer collar (18), the lower outer collar (9) being situated preferably at the end of the walls of the said socket while the upper outer collar (18) is situated above the said collar (9).

10. Coupling device according to one of Claims 7, 8 or 9, in which the wall of the part of the socket surrounding the lower housing is thicker than the wall of the said socket in the said upper housing (5).

11. Coupling device according to Claim 7, **characterized in that** the wall of the socket is made of an elastomer.

## Patentansprüche

1. Vorrichtung zum Kuppeln durch Ineinanderfügen, die dazu bestimmt ist, ein erstes Element mit einem zweiten Element zu verbinden, bestehend aus
- mindestens einem Block (10) mit einem Hohlraum (6), der (i) eine obere Schulter (7), wobei die Schulter (7) eine elastisch verformbare obere Aufnahme (5) und eine untere Aufnahme (12) abgrenzt, und (ii) eine untere Schulter (8) aufweist, und
- mindestens einem Montagestift (1), der aus einer Stange (13) besteht, über der ein Kopf (14) sitzt und die einen einen Anschlag bildenden Kragen (2) aufweist, wobei der Kopf (14) dazu bestimmt ist, sich in die obere Aufnahme (5) des inneren Hohlraums (6) des Blocks (10) derart einzufügen, dass der Kopf (14) vollständig von der Aufnahme (5) und von der Schulter (7) umhüllt ist, und wobei der Durchmesser der Stange (13) geringer ist als der Durchmesser der unteren Aufnahme (12), wobei der Kragen (2) in der Montage-Übergangsstellung der Vorrichtung gegen die Schulter (8) anliegt und in der endgültigen Stellung der Vorrichtung keinen Kontakt mit der Schulter (8) hat.

2. Kupplungsvorrichtung nach Anspruch 1, **dadurch gekennzeichnet, dass** das erste Element die akustische Abschirmung eines Kraftfahrzeugs und das zweite Element ein Motorblock ist.

3. Kupplungsvorrichtung nach Anspruch 1 oder 2, bei der der einen Kragen (2) bildende Anschlag aus einer Vergrößerung des Durchmessers der Stange besteht.

4. Kupplungsvorrichtung nach einem der Ansprüche 1, 2 oder 3, bei der die Außenwand des Blocks (10) zwei Schultern aufweist, eine untere äußere Schulter (9) und eine obere äußere Schulter (18), wobei die untere äußere Schulter (9) sich vorzugsweise am Ende der Wände des Blocks befindet, während die obere äußere Schulter (18) sich oberhalb der Schulter (9) befindet.

5. Kupplungsvorrichtung nach einem der Ansprüche 1 bis 4, bei der der Montagestift (1) fest mit einem ersten Element verbunden ist, wobei der Stift einen Kopf (14) und eine Stange (13) aufweist und dazu bestimmt ist, sich in einen Befestigungsblock (10) einzufügen, der fest mit einem zweiten Element verbunden ist,
**dadurch gekennzeichnet, dass** der Montagestift einen Anschlag aufweist, der sich auf der Stange zwischen dem Kopf und der Basis des Stifts befindet und dazu bestimmt ist, bei der Montage des Stifts (1) in den Block (10) gegen eine innere Schulter des Blocks in Auflage zu kommen.

6. Kupplungsvorrichtung nach Anspruch 5, **dadurch gekennzeichnet, dass** der Anschlag aus einer Vergrößerung des Durchmessers der Stange (13) besteht und einen Kragen (2) mit einem größeren Durchmesser als derjenige der Stange des Stifts bildet.

7. Kupplungsvorrichtung nach einem der Ansprüche 1 bis 6, **dadurch gekennzeichnet, dass** der Befestigungsblock (10) fest mit einem ersten Element verbunden und dazu bestimmt ist, einen Montagestift (1) aufzunehmen, der fest mit einem zweiten Element verbunden ist, wobei der Block aus einer Wand besteht, die einen Hohlraum (6) begrenzt, der eine obere Aufnahme (5), die von einer oberen Schulter (7) begrenzt wird, und eine untere Aufnahme aufweist,
**dadurch gekennzeichnet, dass** die Zone, die die obere Aufnahme (5) begrenzt, eine elastisch verformbare Zone ist, in die sich der Kopf des Stifts einfügt, und die die Arbeitszone bildet, die die Funktion des Entkuppelns gewährleistet, und dass die die untere Aufnahme begrenzende Zone eine relativ steife Zone ist, die dazu bestimmt ist, die Funktion des Befestigens/Lösens zu gewährleisten.

8. Kupplungsvorrichtung nach Anspruch 7, **dadurch gekennzeichnet, dass** der Hohlraum (6) außerdem eine untere Schulter (8) aufweist, die dazu bestimmt ist, bei der Montage des Blocks auf den Stift mit einem Anschlag zusammenzuwirken, der sich auf der Stange des Stifts befindet.

9. Kupplungsvorrichtung nach einem der Ansprüche 7 oder 8, **dadurch gekennzeichnet, dass** die Außenwand des Blocks (10) zwei Schultern aufweist, eine untere äußere Schulter (9) und eine obere äußere Schulter (18), wobei die untere äußere Schulter (9) sich vorzugsweise am Ende der Wände des Blocks befindet, während die obere äußere Schulter (18) sich unter der Schulter (9) befindet.

10. Kupplungsvorrichtung nach einem der Ansprüche 7, 8 oder 9, bei der die Wand des Teils des Blocks, der die untere Aufnahme umgibt, dicker ist als die Wand des Blocks in Höhe der oberen Aufnahme (5).

11. Kupplungsvorrichtung nach Anspruch 7, **dadurch gekennzeichnet, dass** die Wand des Blocks aus Elastomermaterial hergestellt ist.
